# EUROPÄISCHE PATENTSCHRIFT

(11) **EP 2 017 479 B1**
(45) Veröffentlichungstag und Bekanntmachung des Hinweises auf die Patenterteilung: **01.08.2018**
(21) Anmeldenummer: 08010654.5
(22) Anmeldetag: 12.06.2008
(51) Int. Cl.: F04D 13/02, F04D 13/06, F04D 29/047, F04D 29/62

(54) **Befestigung eins Radiallagers im Spalttopf**
Fixing a radial bearing in a pump separating can
Fixation d'un palier radial dans un pot d'écartement d'une pompe

(30) Priorität: 17.07.2007 DE 102007033168
(43) Veröffentlichungstag der Anmeldung: 21.01.2009
(73) Patentinhaber: WILO SE, 44263 Dortmund (DE)
(72) Erfinder: Lyudmyrsky, Maksym, 45881 Gelsenkirchen (DE)
(74) Vertreter: Cohausz Hannig Borkowski Wißgott

(56) Entgegenhaltungen:
- EP-A1- 1 713 159
- EP-A2- 0 204 235
- DE-A1- 3 707 600
- DE-A1- 10 103 209
- DE-A1- 19 534 179
- FR-A1- 2 240 560

## Beschreibung

Die Erfindung betrifft eine Motorkreiselpumpe in Naßläuferbauart mit einem Spalttopf und einem darin befestigten Radiallager, das außen von einem ring- oder buchsenförmigen elastischen Fixierelement umfasst ist, das form- und/oder kraftschlüssig auf dem Radiallager sitzt.

Eine Motorkreiselpumpe dieser Art ist aus der EP 1 713 159 A1 bekannt. Es ist ferner bekannt, ein Radiallager in einem Rohrabschnitt eines metallenen Spalttopfes durch eine Presspassung zu befestigen. Hierdurch findet das Radiallager einen ausreichenden Halt. Eine solche Befestigung führt aber bei einem Spalttopf aus Kunststoff zu einem Ausweichen des Kunststoffmaterials, insbesondere bei höheren Temperaturen, so dass eine sichere Befestigung dauerhaft nicht gegeben ist.

Aufgabe der Erfindung ist es, eine Befestigung der eingangs genannten Art so zu verbessern, dass bei einfacher Montage ein sicherer Halt des Radiallagers in axialer Richtung gegeben ist.

Diese Aufgabe wird erfindungsgemäß dadurch gelöst, dass das Radiallager in einem koaxialen Rohrabschnitt des Spalttopfes einliegt, der gegenüber dem übrigen Spalttopf einen geringeren Durchmesser aufweist, wobei das Fixierelement form- und/oder kraftschlüssig auf dem Radiallager sitzt und das an der Innenwand des Rohrabschnitts in Axialrichtung und/oder Umfangsrichtung formschlüssig gehalten ist.

Das zusätzliche Fixierelement sorgt für einen sicheren Halt des Radiallagers in axialer Richtung, insbesondere wenn der Spalttopf aus einem nachgiebigen Material wie Kunststoff, besteht. Hierbei wird das Spalttopfmaterial kaum beansprucht, so dass es nicht nachgibt. Auch bewirkt das zwischen dem Spalttopf und dem Radiallager einliegende elastische Fixierelement eine Geräuschdämpfung.

Eine besonders einfache und leichte Montage ist gegeben, wenn das Fixierelement an seiner Außenseite mindestens einen Vorsprung aufweist, der in einer Ausnehmung des Rohrabschnitts einliegt. Hierbei bilden Vorsprung und Ausnehmung eine Rastverbindung.

Eine besonders sichere Befestigung ist dann gegeben, wenn das Fixierelement an seiner Außenseite zwei insbesondere nasenförmige Vorsprünge aufweist, die diametral einander gegenüberliegen. Hierzu wird auch vorgeschlagen, dass die Ausnehmung in der Spalttopfwand von einer insbesondere hinterschnittenen taschenförmigen Vertiefung oder Ringnut gebildet ist.

Besonders vorteilhaft ist es, wenn gegen ein Verdrehen des Radiallagers gegenüber dem Spalttopf zusätzlich eine formschlüssige Verbindung zwischen dem Radiallager und dem Spalttopf besteht. Hierbei kann an der Spalttopfinnenwand mindestens eine Rippe vorstehen, die in eine Nut an der Außenseite des Radiallagers einliegt.

Als vorteilhafte Materialien wird vorgeschlagen, dass der Spalttopf aus Kunststoff, das Fixierelement aus Ethylen-Propylen-Dien-Kautschuk (EPDM) und das Radiallager aus Kohlenstoff besteht.

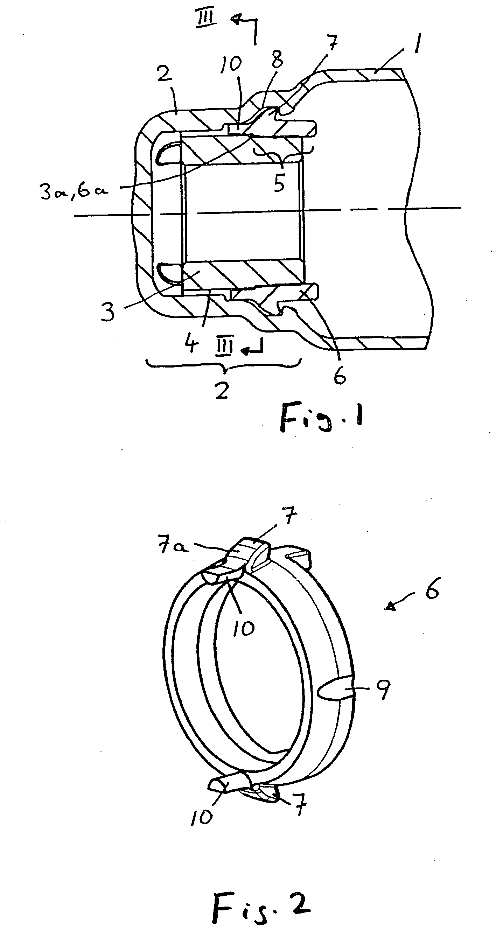

Ein Ausführungsbeispiel der Erfindung ist in den Zeichnungen dargestellt und wird im Folgenden näher beschrieben. Es zeigen
- Fig. 1: einen axialen Schnitt durch den hinteren Bereich eines Spalttopfes und
- Fig. 2: eine perspektivische Ansicht des Fixierelements und

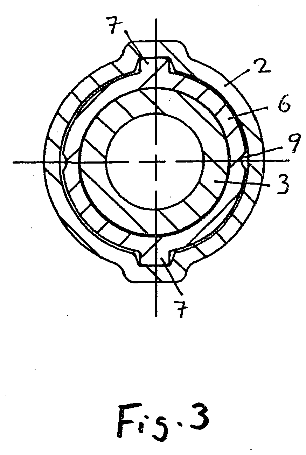

- Fig. 3: einen radialen Querschnitt durch den hinteren Bereich des Spalttopfes nach III - III in Figur 1.

Eine Motorkreiselpumpe weist als Nassläuferpumpe einen Spalttopf 1 aus Kunststoff auf, der im Elektromotor den Rotor vom Stator trennt und von der zu pumpenden Flüssigkeit durchflossen ist. An dem dem Pumpenläufer abgewandten Ende bildet der Spalttopf 1 einen koaxialen Rohrabschnitt 2 geringeren Durchmessers als der übrige Spalttopf. In diesem Rohrabschnitt 2 liegt ein Radiallager 3 als Kohlegleitlager koaxial ein und nimmt das hintere Ende der nicht dargestellten Motoren- bzw. Pumpenwelle auf.

Auf dem Außenmantel 4 des Radiallagers 3 sitzt in einem dem Pumpenläufer zugewandten Bereich 5 ein ringförmiges Fixierelement 6 aus Ethylen-Propylen-Dien-Kautschuk (EPDM) koaxial auf, wobei die Befestigung des Fixierelements 6 auf dem Radiallager 3 form- und/oder kraftschlüssig ist. So bildet hierzu im Ausführungsbeispiel die Innenseite des Fixierelements 6 eine Stufe 6a, die an einer entsprechend geformten Stufe 3a des Radiallagers 3 anliegt. Zusätzlich oder alternativ besteht eine Pressverbindung zwischen den Teilen 3 und 6.

Das Fixierelement 6 bildet auf einander diametral gegenüberliegenden Seiten außenseitig radial vorstehende, nasenförmige Vorsprünge 7, die in eine taschenförmige Vertriefung 8 in der Innenwand des Rohrabschnitts 2 rastend einliegen. Für diese rastende Verbindung bilden die Vorsprünge 7 Auflaufschrägen 7a, um bei einem Einschieben des Radiallagers 3 zusammen mit dem Fixierelement 6 in den Rohrabschnitt 2 einen rastenden Halt zu erreichen.

Auf der Außenseite des Fixierelements 6 befindet sich mindestens eine Nut 9. Ferner stehen am Fixierelement 6 achsparallele, stiftförmige Vorsprünge 10 vor, die als Montagehilfe bei der Positionierung des Fixierelementes auf dem Radiallager dienen.

## Patentansprüche

1. Motorkreiselpumpe in Naßläuferbauart mit einem Spalttopf (1) und einem darin befestigten Radiallager (3), das außen von einem ring- oder buchsenförmigen elastischen Fixierelement (6) umfasst ist, das form- und/oder kraftschlüssig auf dem Radiallager (3) sitzt, **dadurch gekennzeichnet, dass** das Radiallager (3) in einem koaxialen Rohrabschnitt (2) des Spalttopfes einliegt, der gegenüber dem übrigen Spalttopf einen geringeren Durchmesser aufweist, wobei das Fixierelement (6) an der Innenwand des Rohrabschnitts (2) in Axialrichtung und/oder in Umfangsrichtung formschlüssig gehalten ist.

2. Motorkreiselpumpe nach Anspruch 1, **dadurchgekennzeichnet**, dass das Fixierelement (6) an seiner Außenseite mindestens einen Vorsprung (7) aufweist, der in einer Ausnehmung (8) des Rohrabschnitts (2) einliegt.

3. Motorkreiselpumpe nach Anspruch 2, **dadurchgekennzeichne**t, dass Vorsprung (7) und Ausnehmung (8) eine Rastverbindung bilden.

4. Motorkreiselpumpe nach Anspruch 2 oder 3, **dadurch gekennzeichnet, dass** das Fixierelement (6) an seiner Außenseite zwei insbesondere nasenförmige Vorsprünge (7) aufweist, die diametral einander gegenüberliegen.

5. Motorkreiselpumpe nach einem der Ansprüche 2 bis 4, **dadurch gekennzeichnet, dass** die Ausnehmung (8) in der Spalttopfwand von einer insbesondere hinterschnittenen taschenförmigen Vertiefung oder Ringnut gebildet ist.

6. Motorkreiselpumpe nach einem der vorherigen Ansprüche, **dadurch gekennzeichnet, dass** gegen ein Verdrehen des Radiallagers (3) gegenüber dem Spalttopf (1) eine formschlüssige Verbindung zwischen dem Radiallager (3) und dem Spalttopf (1) besteht.

7. Motorkreiselpumpe nach Anspruch 6, **dadurch gekennzeichnet, dass** an der Spalttopfinnenwand mindestens eine Rippe vorsteht, die in einer Nut an der Außenseite des Radiallagers (3) einliegt.

8. Motorkreiselpumpe nach einem der vorherigen Ansprüche, **dadurch gekennzeichnet, dass** der Spalttopf (1) aus Kunststoff besteht.

9. Motorkreiselpumpe nach einem der vorherigen Ansprüche, **dadurch gekennzeichnet, dass** das Fixierelement (6) aus Ethylen-Propylen-Dien-Kautschuk (EPDM) besteht.

10. Motorkreiselpumpe nach einem der vorherigen Ansprüche, **dadurch gekennzeichnet, dass** das Radiallager (3) Kohlenstoff aufweist.

## Claims

1. Motor-driven centrifugal pump of wet rotor design having a separating can (1) and a radial bearing (3) fixed therein, which is surrounded on the outside by a ring-shaped or bush-shaped resilient fixing element (6) which is seated on the radial bearing (3) with a form and/or force fit, **characterized in that** the radial bearing (3) lies in a co-axial tube section (2) of the separating can which has a lower diameter than the remaining separating can, wherein the fixing element (6) is held in the axial direction and/or in the circumferential direction by a form fit on the inner wall of the tube section (2).

2. Motor-driven centrifugal pump according to Claim 1, **characterized in that** the fixing element (6) has on its outer side at least one projection (7), which lies in a recess (8) in the tube section (2) .

3. Motor-driven centrifugal pump according to Claim 2, **characterized in that** projection (7) and recess (8) form a latching connection.

4. Motor-driven centrifugal pump according to Claim 2 or 3, **characterized in that** the fixing element (6) has on its outer side two in particular nose-like projections (7), which are located diametrically opposite each other.

5. Motor-driven centrifugal pump according to one of Claims 2 to 4, **characterized in that** the recess (8) in the separating can wall is formed by an in particular undercut pocket-shaped depression or annular groove.

6. Motor-driven centrifugal pump according to one of the preceding claims, **characterized in that** there is a form-fitting connection between the radial bearing (3) and the separating can (1), opposing rotation of the radial bearing (3) relative to the separating can (1).

7. Motor-driven centrifugal pump according to Claim 6, **characterized in that** at least one rib, which lies in a groove on the outer side of the radial bearing (3), projects on the separating can inner wall.

8. Motor-driven centrifugal pump according to one of the preceding claims, **characterized in that** the separating can (1) consists of plastic.

9. Motor-driven centrifugal pump according to one of the preceding claims, **characterized in that** the fixing element (6) consists of ethylene propylene diene rubber (EPDM).

10. Motor-driven centrifugal pump according to one of the preceding claims, **characterized in that** the radial bearing (3) has carbon.

## Revendications

1. Pompe centrifuge à moteur du type à rotor noyé avec un pot d'écartement (1) et un palier radial (3) fixé dans celui-ci, qui est entouré extérieurement par un élément de fixation élastique (6) en forme d'anneau ou de douille, qui s'applique par emboîtement et/ou par adhérence sur le palier radial (3), **caractérisée en ce que** le palier radial (3) est agencé dans une partie tubulaire coaxiale (2) du pot d'écartement, qui présente un plus petit diamètre par rapport au reste du pot d'écartement, dans laquelle l'élément de fixation (6) est maintenu sur la paroi intérieure de la partie tubulaire (2) par emboîtement en direction axiale et/ou en direction périphérique.

2. Pompe centrifuge à moteur selon la revendication 1, **caractérisée en ce que** l'élément de fixation (6) présente sur son côté extérieur au moins une protubérance (7), qui est agencée dans un évidement (8) de la partie tubulaire (2) .

3. Pompe centrifuge à moteur selon la revendication 2, **caractérisée en ce que** la protubérance (7) et l'évidement (8) forment une liaison par encliquetage.

4. Pompe centrifuge à moteur selon la revendication 2 ou 3, **caractérisée en ce que** l'élément de fixation (6) présente sur son côté extérieur deux protubérances (7) en particulier en forme d'ergot, qui sont diamétralement opposées l'une à l'autre.

5. Pompe centrifuge à moteur selon l'une quelconque des revendications 2 à 4, **caractérisée en ce que** l'évidement (8) est formé dans la paroi du pot d'écartement par un creux en forme de poche ou par une rainure annulaire en particulier à contre-dépouille.

6. Pompe centrifuge à moteur selon l'une quelconque des revendications précédentes, **caractérisée en ce qu'**il existe une liaison par emboîtement entre le palier radial (3) et le pot d'écartement (1) pour empêcher une rotation du palier radial (3) par rapport au pot d'écartement (1).

7. Pompe centrifuge à moteur selon la revendication 6, **caractérisée en ce qu'**au moins une nervure, qui est agencée dans une rainure sur le côté extérieur du palier radial (3), est saillante sur la paroi intérieure du pot d'écartement.

8. Pompe centrifuge à moteur selon l'une quelconque des revendications précédentes, **caractérisée en ce que** le pot d'écartement (1) est constitué de matière plastique.

9. Pompe centrifuge à moteur selon l'une quelconque des revendications précédentes, **caractérisée en ce que** l'élément de fixation (6) se compose de caoutchouc éthylène-propylène-diène (EPDM).

10. Pompe centrifuge à moteur selon l'une quelconque des revendications précédentes, **caractérisée en ce que** le palier radial (3) présente du carbone.
